# EUROPEAN PATENT APPLICATION

(11) **EP 4 137 317 A1**
(43) Date of publication of application: **22.02.2023**
(21) Application number: 21788731.4
(22) Date of filing: 04.03.2021
(51) Int. Cl.: B32B 27/08, B32B 27/32, B29C 67/02, C08L 67/06, C08K 3/34, C08F 265/06, C08F 32/08, E01B 3/36, E01B 9/14, C07C 13/61

(54) **POLYMER COMPOSITE, USE OF SAID COMPOSITE TO PREPARE ARTICLES, METHOD FOR PREPARING SAID COMPOSITE AND ARTICLES INCLUDING SAID COMPOSITE**

(30) Priority: 13.04.2020 BR 102020007268
(71) Applicant: Sileto Pesquisa E Desenvolvimento Ltda, 22640-102 Rio de Janeiro, RJ (BR)
(72) Inventor: ESPERANDIO DE OLIVEIRA, Geiza, 21931-310 Rio de Janeiro (BR)
(74) Representative: Patentree
(86) International application number: PCT/BR2021/050095
(87) International publication number: WO 2021/207809

(57) **Abstract**

This invention refers to a polymer composite that comprises sand, preferably medium sand, at least one load, at least one resin selected of dicyclopentadiene (DCPD) polyester resin and PET resin, and at least one phase compatibilizer additive and/or flexibilizer agent of polymer structure.

Further, this invention refers to the process to prepare said composite, as well as to the use of said composite to prepare some articles including railway sleepers.

This composite discloses several advantages when compared to materials currently used in the preparation of railway sleepers, as it is more versatile than steel, more available and as efficient as wood, more durable than concrete, as it comprises an optimized composition that encompasses optimal physical and chemical properties to the function it is intended to.

## Description

### FIELD OF THE INVENTION

This invention pertains to the Civil Construction, Transport, Logistic and Infrastructure fields, and refers to a polymer composite comprising at least one load, at least one additive, and at least one resin selected of dicyclopentadiene (DCPD) and a thermoset PET resin.

Further, this invention refers to a process to prepare said composite, as well as to the use of said composite to prepare some articles including, but not limited to railway sleepers, crossheads, purlins, interlocking floor tiles, pre-molded civil construction panels, artificial stone for benches and floors, pavement in plates used in bridges, coating plates and "cobogos".

### BACKGROUND

Due to the lack of incentives or investments throughout the years, the railway assets were exposed to depreciation and to poor maintenance. In view of the anticipated renewals and of an increased cargo flow, particularly towards the ports, the current scenario requires creativity in planning actions to the recovery and modernization of railways

Sleeper is the element of the railway superstructure the function of which is to receive and to transmit to the ballast the efforts produced by the vehicles' actions, thus supporting the rails, allowing the fixation thereof and keeping an invariant distance between them. For such:
- Its dimensions (length and width) must provide a support surface that is enough to prevent the working rate at the ballast from exceeding a certain limit;
- its width must provide the rigidity as needed, with some elasticity;
- it must have sufficient resistance to the efforts;
- it must have durability;
- it must allow leveling the ballast, at its phase;
- it must efficiently oppose the longitudinal and transversal displacements of the railways; and
- it must allow a good fixation of the railway, meaning a steady, but not excessively rigid fixation.

As the consumption of sleepers increased and wood became scarce, treatment measures using conservation products were developed to improve the useful life of wooden sleepers, thus avoiding growth of micro-organisms such as fungi, and insect proliferation. Such products appear to be highly contaminant to the soil. Another solution found to the growing wood scarcity was the plantation of eucalyptus forests, as it is a fast-growing tree, the wood of which is highly dense, thus requiring few or no conservative treatment at all. Nevertheless, the useful life of eucalyptus as sleeper is extremely low and gives rise to the need of frequent replacements. Within this context of scarce natural sources, and in search of replacing wood, both for economic and environmental reasons, sleepers of other materials, such as concrete, steel and polymers, have been adopted and researched.

Armed concrete sleepers do not deserve the unanimous preference from railway sector due to the higher price, to the lower energy absorption and lower resistance to impact, when compared to other sleepers. Metallic sleepers are lighter and can be easily handled; nonetheless, such lightness compromise the stability thereof, in addition to making it noisier in operation. A solution to this concern is a sleeper made of plastic or polymer.

Armed concrete, yet being an excellent material in terms of versatility and cost, has disadvantages such as the appearance of internal tensions that, combined to its low mechanic resistance, make it vulnerable to cracks that allow the penetration of aggressive agents with consequent production of large corrosion. These are the reasons why conventional armed concrete has been instigating researchers to look for manners of improving its characteristics.

Polymer modified concrete was initially used in the repair of Portland cement. However, in the last few years, there has been a growing expansion of its applications in industrially developed countries.

Polymer concrete composites are defined as a mixture of agglomerates by using as only binder a polymer, a copolymer, a terpolymer or mixtures of polymers, without using any ceramic binder such as cement.

In Brazil, polymer composites used to the preparation of sleepers are still rarely used, due to higher costs and scarce knowledge of properties. Currently, there are known solutions involving use of polyethylene and polypropylene as polymer matrix, being both thermoplastic, more sensible to thermal variations and flammable.

Literature discloses a few studies on the use of orthophthalic and isophtalic polyester resins, such as polymer-concrete. However, the studies performed so far do not demonstrate promising results concerning the manufacture of sleepers.

We point out below some lessons from the state of art in relation to this matter:

The document BR 11 2017 020280-8 describes a composition for railway pads, characterized by the fact that it comprises an aleatory specific non-conjugated ethylene/ α-olefin/polyene copolymer (a), clay (b) and a silane coupling agent containing a sulfur atom (c). The molded object obtained from the composition through reticulation, particularly foamy mold reticulation, has a rubber elasticity that is suitable for railway pads.

On its turn, the document CN 101220184 describes a rubber support plate that comprises a non-conjugated diene. It is said that this invention pertains to the field of processing accessories for rail, subway, and light rail vehicle industries, and particularly refers to a rubber plate and to a process to the manufacture thereof. This plate is recommended to be placed between the rail and the sleeper.

The document CN 103221457 describes a modified polymer that comprises sulfur and dicyclopentadiene, in addition to other compounds. This polymer is recommended for use in a concrete composition.

On its turn, the document EA 011818 describes, among other categories, a sleeper that comprises a structural composite material formed by a core material of stable geometric dimensions, surrounded by a coating of stable geometric dimension adhered to the core material, wherein the coating is a bladed structure formed by, at least, one band of reinforcing cords bonded to at least one layer of a web material selected from the group consisting of rigidified paper and tissue containing paper or tissue impregnated of rigidified resin, wherein the rigidified resin is mixed to the solid dispersion filling.

The document BR 0516420 reveals a composite structural material suitable, for example, as a replacement for wooden boards, sheets, or posts. It comprises a dimensionally stable core material surrounded by a dimensionally stable, laminar covering that is adherent to the core material. The laminar covering is comprised of at least one band of substantially parallel reinforcing cords bonded to at least one layer of a dimensionally stable web material selected from the group consisting of rigidified paper and rigidified cloth Preferably the band of reinforcing cords is sandwiched between two layers of rigidified paper or cloth. The core material can be, for example, a foamed synthetic resin with or without filler.

The document BR 9711376 refers to a composite produced from recycled materials, among which PET soft drink bottles, poorly adjusted plastics or residues from gutters. These materials usually include a significant amount of high-density polyethylene ("HDPE") mixed to a variety of other plastics, such as polyvinyl chloride ("PVC"), polyethylene terephthalate ("PET") (soft drink bottles, or other bottles), polypropylene ("PP"), polyethylene ("PE") and other minor components. The composite building material is formed by an extruded mixture of high-density polyethylene and a thermoplastic coated fibre material such as fiberglass.

The document EP 3263767 refers to mold bodies that are made of thermoplastic material or contain a basic body in their longitudinal movement. The invention discloses polymers, particularly polyolefins used as thermoplastic material, particularly one or more materials of the polyethylene group, particularly LDPE and/or HDPE polyethylene, polypropylene, polyvinyl chloride, polyethylene ether, polycarbonate, polyamide, Acrylonitrile butadiene styrene, poly(methyl acrylate, polystyrene.

The document PI 1003132-4 refers to an ecologic mass formed of plastic materials, tar, stone, and sand and to the process for obtaining such mass, that is applied in the civil construction and/or in the manufacture of sleepers. The relevant plastic materials are originated by processes of packaging recycling, particularly focused on recycling PET bottles; they are thermoplastic materials, operating at temperatures of the order from 200°C to 300°C.

The document PI 0501724-6 refers to processing of useless tires through arrangement, in blades, of glued strips of tires overlapping a corrosion-resistant and ribbed steel plate, coupled to a support plate having an elastic clip to lock the rail. This whole set is fixed by metallic rivets, that create a unit and keep the gauge at the measure estimated.

The document PI 0502483-8 refers to sleepers made of prestressed tires, wherein the manufacture thereof consists in using parts of tires that shall be gathered to each other by one or more steel rods. The parts of tires gathered by compression of the steel rods form the sleeper body, resistant to the efforts from the train travel. Due to their flexibility, the allow a rail traffic without vibrations or noise.

Therefore, the state of art does not contemplate any solution corresponding to the one disclosed herein, that combines technical peculiarities, economic advantages, safety and reliability.

### OBJECTIVES OF THE INVENTION

So, one objective of this invention consists in developing composite materials for use in infrastructure, particularly in the manufacture of polymer sleeper, as well as of other artefacts currently made of cement matrix, such as interlocking floor tiles, pre-molded civil construction panels, artificial stone for benches and floors, pavement in plates used in bridges, coating plates and "cobogos".

It is an objective of this invention to provide sleepers made of thermoset polyester resins and additives to replace concrete sleepers with sleepers made of thermo-rigid polymer.

Another objective of this invention is to provide polymer sleepers showing high mechanic, chemical and hazard resistance, that advantageously replace the existing sleepers.

Another objective of this invention is to provide rail sleepers with mechanic and physical and chemical properties that meet the requirements under specific local and international rules on sleepers, and present the dimensions as required for operation in railways (broad gauge, metre gauge, mixed gauge).

Another objective of this invention is to provide a polymer composite to be primarily used in the preparation of sleepers, with technical and economic advantages when compared to wooden, steel and concrete sleepers.

Further, another objective of this invention is to provide sleepers that, when compared to concrete sleepers, are lighter, impervious and do not necessarily require any iron frame in its structure.

Another objective of this invention is to provide interlocking floor tiles with lower width (≤ 60 mm) as resistant to compression as the current high-performance width interlocking floor tiles (100 mm) that undergo severe compression and abrasion.

Another objective of this invention is to provide products currently made of cement that undergo material compression efforts or strong abrasion, orthat still require specific finishing (color or polishing, for instance), such as pre-molded civil construction panels, artificial stones for benches and floors, pavement in plates used in bridges, coating plates and "cobogos".

### SUMMARY OF THE INVENTION

This invention reaches such objectives, among others, through a polymer composite comprising:
- sand, preferably medium;
- at least one load selected from the group of fly ashes, silt, calcium carbonate powder, stone powder, foundry sand, thin sand, silica, and combination thereof;
- at least one resin selected among dicyclopentadiene, PET monomer and combination thereof;
- at least one additive selected among phase compatibilizers, also known as coupling agents, such as vinyltrimethoxysilane, methacryl -trimethoxysilane methacryl oxypropyl-trimethoxysilane, calcium diacrylate, zinc diacrylate and combination thereof, or flexibilizer agents of polymer structure selected among butyl acrylate, butyl methyl acrylate, methyl meta acrylate, triethylene glycol methacrylate, ethylhexyl methacrylate, and combinations thereof.

Further, this invention reaches these objectives, among others, through optional addition, as needed, of the following phases to the composite:
- milled rubber from tires;
- fiberglass or metallic fibers, that can be short and uniformly distributed through the matrix, or long and aligned in an only direction;
- metallic or polymer screens and frames, in layers or structures;
- flexibilizer agents of polymer structure selected among butyl acrylate, butyl methyl acrylate, methyl meta acrylate, triethylene glycol methacrylate, ethylhexyl methacrylate, either in an isolated manner or in combinations thereof.

Further, this invention reaches these objectives, among others, through a molding process to prepare the above polymer composite.

Further, this invention reaches these objectives, among others, through the use of a polymer composite as defined above to prepare an article selected among the following: sleepers, crossheads, purlins, interlocking floor tiles, pre-molded civil construction panels, artificial stone for benches and floors, pavement in plates used in bridges, coating plates and "cobogos".

### DETAILED DESCRIPTION OF THE INVENTION

This invention refers to a polymer composite comprising fine aggregates and at least one resin selected among dicyclopentadiene (DCPD), PET monomers for thermoset resin, and the use of at least one additive, preferably a phase compatibilizer additive, also known as coupling agent, such as vinyltrimethoxysilane, methacryl -trimethoxysilane methacryl oxypropyl-trimethoxysilane, calcium diacrylate, zinc diacrylate or flexibilizer agents of polymer structure selected among butyl acrylate, butyl methyl acrylate, methyl meta acrylate, triethylene glycol methacrylate, ethylhexyl methacrylate, and/or combinations thereof.

In a preferential embodiment of this invention, the composite comprises resin, sand (preferably medium), and at least one load selected from the group formed by fly ashes, silt, calcium carbonate powder, stone powder, foundry sand, thin sand, silica, and combination thereof, the mixture of which is optimal to comply with requirements concerning load and distribution to the ballast. Of note, whenever it is used in the preparation of sleepers, this composite:
- has no water in its composition;
- has no high-density armed frame;
- is impervious;
- is lighter than iron concrete;
- is perfectly compatible with concrete sleepers, and partially compatible with wooden sleepers, at any format and size;
- is a highly homogeneous material, thus being more reliable for hazard prevention;
- is highly resistant to efforts, having high mechanic compression and traction resistance in the diametral flexion and compression, as well as in fatigue processes;
- its durability improves its cost effectiveness throughout the time.

It is still worth emphasizing that the polymer composite of this invention is a polymer concrete obtained from replacement, either in whole or in part, of the convention concrete agglomerant with a polymer.

The composite of this invention comprises resin, sand (preferably medium) and at least one load, and can still comprise optional components, such as:
- fiberglass or metallic fibers, that can be short and uniformly distributed through the matrix, or long and aligned in an only direction;
- milled rubber from tires;
- metallic or polymer screens and frames, in layers or structures.
- at least one additive, preferably a phase compatibilizer additive, also known as coupling agent, such as vinyltrimethoxysilane, methacryl - trimethoxysilane methacryl oxypropyl-trimethoxysilane, calcium diacrylate, zinc diacrylate or flexibilizer agents of polymer structure selected among butyl acrylate, butyl methyl acrylate, methyl meta acrylate, triethylene glycol methacrylate, ethylhexyl methacrylate, and/or combinations thereof.

### Resin

The resin contained by said composite is selected among dicyclopentadiene (DCPD), PET monomers, and combination thereof.

### DCPD

Dicyclopentadiene (DCPD) is a chemical compound having the formula C₁₀H₁₂. At room temperature, it is a white brittle wax with acrid smell.

It is widely used in resins, particularly non-saturated polyester resins. It is also used in inks and adhesives.

In this invention, DCPD is added at an amount ranging from 3% to 40% in mass, preferably from 5% to 35% in mass, and still more preferably from 7 to 30% in mass, based on the total mass of the composite's composition.

### PET

Polyethylene terephthalate (PET) is a thermoplastic polymer developed in 1941, formed by a reaction between terephtalic acid and ethylene glycol. It is primarily used in the form of fibers to the weaving industry and packaging for drinks. It is a polyester, as it has the functional ester group in its major chain, and has thermoplastic properties, meaning that it can be reprocessed several times through a same, or another transformation process.

The Polyethylene terephthalate is produced at industrial scale in two steps: pre-polymerization and polycondensation, wherein the first step corresponds to the manufacture of the bis terephthalate oligomer (2-hydroxiethylene), BHET, from two routes, while polycondensation is responsible for the PET production. The first route is the direct esterification, during which the terephthalic acid shall react with ethylene glycol; this route is characterized by the fact that it is heterogeneous and self-catalytic, as it does not require the use of catalyzers, within an operational temperature around 240-260°C. During the second route, the terephthalic acid is replaced with di-methylene terephthalate ester, by using catalyzers within an operational temperature ranging from 170 to 210°C. During polymerization reactions through condensation of said routes, water and methanol are released. In this invention, the PET resin is added to prepare the composite in the form of PET monomers, so as to reticulate the material, thus granting mechanic resistance to it.

There are few reports from the state of art about use of PET as load in concrete; the bottle is grinded and the filaments are used to fill out the composition, or the sleepers are directly made of plastic.

The state of art discloses composites comprising PET in the form of filaments. In this case, filaments are used as load, rather than as matrix, as happens in this invention. Besides, both the filament-shaped PET and sleepers directly made of such polymer refer to a thermoplastic version thereof, that is sensitive to thermal variations, being thus vulnerable to warping and deformations. Moreover, the PET resin as used herein is a thermos-rigid reticulated resin, unlikely to undergo any thermal influence, being thus able to keep the form of the final article for long. Therefore, this use entirely differs from the use of PET in composites for various purposes.

In this invention, PET monomers are added at an amount ranging from 5% to 30% in mass, preferably from 8% to 25% in mass, and still more preferably from 10% to 20% in mass, based on the total mass of the composite's composition.

Further, the composite of this invention comprises sand. In a preferential embodiment, the sand is predominantly formed of silica particles, but can contain other minerals, such as feldspar, mica, zircon, magnetite, ilmenite, monazite and cassiterite. The sand commercially available has also moisture, as this is a washed sand with medium granulometry (0.2mm and 0.6mm) for removal of most part of the organic impurities.

In this invention, sand is added at an amount ranging from 40% to 95% in mass, preferably from 45% to 90% in mass, and still more preferably from 50% to 80% in mass, based on the total mass of the composite's composition.

Besides, the composite of this invention comprises at least one load selected among the group formed by fly ashes, silt, calcium carbonate powder, stone powder, foundry sand, thin sand, silica and combination thereof, that operate as load to fill out spaces potentially empty among the sand grains. The material forming the fly ashes is solidified in suspension in the exhaust gases from burners, being collected by electrostatic precipitators, or removed through mechanic filtration. The solidification in suspension within a gaseous flow induces the generation of particles, preferably spherical particles, that are hollow in many cases, or have a huge vole of pores the dimensions of which range from 0.5 µm to 100 µm.

As they derive of mineral impurities contained in the coal, the ashes are primarily formed by silicon dioxide (SiOz), aluminum oxide (Al₂O₃) and iron oxide (Fe₂O₃). The ashes perform a pozzolanic activity, by reacting, at normal temperature and in presence of water, with calcium hydroxide and alkalis to form calcium silicate hydrates, compounds showing the same cohesion ability as Portland cement, meaning that they keep a cohesion between the aggregates and the cement matrix. In this invention, the pozzolanic activity is not relevant, as the matrix is not Portland cement, but polymer resin, the cure reactions of which do not involve the formation of hydrated calcium silicate.

According to their composition and to their pozzolanic activity, fly ashes are classified by the rule ASTM C618 into two categories: (1) class F fly ashes, and (2) class C fly ashes. The major difference between these two classes is the calcium, silica, alumina and iron contents in their compositions that, on their turn, are determinant to define the physical and chemical properties of the materials, and consequently their properties for technological uses.

In this invention, ashes are added at an amount ranging from 2% to 30% in mass, preferably from 4% to 25% in mass, and still more preferably from 5% to 20% in mass, based on the total mass of the composite's composition.

### Optional components

The composite of this invention can still contain:
- a reaction promoter system that mixes to resin at an amount ranging from 0.1% to 7.0% in mass, based on the total mass of the composite. Preferably, 0.5% to 3.0% of cobalt naphthenate or octoate is used, either in an isolated manner, or in association with dimethylaniline (DMA), in an amount ranging from 0.001% to 0.100%;
- a starter at an amount ranging from 0.1% to 5.0% in mass, based on the total mass of the composite. Preferably, one uses from 0.1% to 1.0% of methyl ethyl ketone peroxide compound of medium reactivity, desensitized with dimethyl phtalate;
- a compatibilizer additive, also known as coupling agent, used in an amount ranging from 0 to 1.0% in mass of the compound, being preferably vinyltrimethoxysilane, but also replaced with methacryl -trimethoxysilane methacryl oxypropyl-trimethoxysilane, calcium diacrylate, zinc diacrylate and combination thereof;
- a flexibilizer agent of polymer structure used in amounts ranging from 0 to 1.0% in mass of the compound, and selected among butyl acrylate, butyl methyl acrylate, methyl meta acrylate, triethylene glycol methacrylate, ethylhexyl methacrylate, and combinations thereof;
- milled rubber derived of tires, in amounts ranging from 0% to 40% in mass, based on the total mass of the composite, and preferably using from 0% to 25% of milled rubber;
- fiberglass or metallic fibers, that can be short and uniformly distributed through the matrix, or long and aligned in an only direction, in amounts ranging from 0% to 10% in mass, based on the total mass of the composite. Preferably, one uses from 0% to 2.5% of fiberglass or metallic fibers;
- metallic or polymer structures of wires or screens, in amounts from 0% to 25% in mass, based on the total mass of the composite. Preferably, one uses from 0% to 15% of metallic or polymer structures;
- finishings, such as coloring or polishings, are optional, depending on the application of the produced article.

In a preferential embodiment, the polymer composite of this invention is used in the preparation of several articles, such as railway sleepers, crossheads, purlins, interlocking floor tiles, pre-molded civil construction panels, artificial stone for benches and floors, pavement in plates used in bridges, coating plates and "cobogos".

In this case, the sleeper, object of the preferential embodiment among the articles of this invention, discloses several characteristics, among which the following:
- full compliance with the load requirements, that preferably range from 20 tons/axis to 40 tons/axis;
- longer useful life than concrete sleepers;
- price of the part below the price of steel part.

Process for preparing the polymer composite of this invention.

The polymer composite of this invention is preferably prepared according to a process that comprises the following steps:
A. Drying the sand;
B. Weighing each component formed by, at least, one resin, sand and loads;
C. Mixing dry components, namely sand and at least one load for about 20 minutes until reaching a very homogeneous mix, by using conventional mechanic mixer (such as concrete mixer or industrial mixer), or manual mixture depending on the amount of composite to be produced, at air pressure and temperature;
D. Adding at least one additive that is at least a coupling agent, or a flexibilizer agent or combinations thereof to, at least, one resin to form an organic mixture, also known as sirup. Mixing for some seconds.
E. Adding the starter to the organic mix or sirup, and mixing for some seconds, until reaching a homogeneous aspect.
F. Adding the organic mixture or sirup to the mixer containing the mix of dry aggregates, and subsequently mixing for 1 to 2 minutes, until reaching a homogeneous aspect.
G. Molding the article to be produced, preferably previously greased with a demolding agent that can be paraffins, mineral oil, polymer solution of linear polymers (polyethylene, polypropylene, polyalcohol vinyl, vinyl polychloride, polytetrafluorethylene), and/or combinations thereof.
H. Pre-curing in an incubator at air pressure and temperature of about 60°C for about 120 minutes, and then curing for, at least, 7 days at air pressure and temperature.

Process for preparing sleepers according to this invention.

The sleeper of this invention is preferably prepared according to a process that comprises the following steps:
A. Preparing the composite according to the above process;
B. Molding at the sleeper mold at the gauge as appropriate for manufacture;
C. Pre-curing in an incubator at air pressure and temperature of about 60°C for about 120 minutes, and then curing for, at least, 7 days at air pressure and temperature.

Depending on the operational conditions of the railway, this new composite can replace, either in whole or in part, hardwood, eucalyptus and concrete sleepers, as:
- hardwood, that is currently under control, is poorly available to the manufacture of wooden sleepers;
- eucalyptus wood has no durability, when compared to other sleepers;
- concrete undergoes quick deterioration at the frame structure, due to corrosion.

This invention discloses several technical and economic advantages in the light of prior art, among which:
- the polymer composite of this invention can be used in an endless number of applications (metre gauge sleepers, broad gauge, crossheads, etc.), due to its high mechanic resistance, its excellent di-electric properties, low porosity and water absorption; chemical resistance and resistance to corrosion, in addition to low weight;
- this product has advantages when compared to wooden sleepers, as it does not undergo fungi attack and consequent insect proliferation, being also unlikely to deteriorate throughout the time;
- it is resistant to rotting, insect attack and sun radiation;
- further water absorption does not result into loss of hardness or other mechanical property, as it arises from further porosity, but not from chemical reaction with water;
- when compared to armed concrete, it is lighter, and impervious as it does not require an iron frame in its structure, as happens to armed concrete;
- the composite of this invention does not comprise toxic components after cure.

On its turn, the sleeper of this invention:
- presents satisfactory performance whenever subject to loads of turning or traction materials having up to 32.5 t/axis at the broad gauge, or to lower loads at metre and standard gauges;
- presents performance compatible with the one disclosed by pure hardwood for the same spacing as adopted to the wood;
- does not present signs of crus or deformation at fixation region, when subject to the traffic conditions described herein;
- the transversal section of sleepers is unaffected, without empty spaces or bubbles;
- has insulating properties, without risk of track circuit occupation;
- may have any dimension;
- the production of the part is inert and impervious;
- it is highly homogeneous, thus generating reliability;
- it is preferably produced by using fly ash as load, as it is a liability inherent to steelworks, thermoelectric and agricultural industries;
- its production does not involve using water, and consequently does not generate liquid effluents.

### Exemplary composition of the composite of this invention

Below, we describe a preferential embodiment of the composite of this invention:

| **Raw materials** | **Quantity (%)** |
|---|---|
| Resin | 10.0-18.0 |
| Starter | 1.0 |
| Flying ash | 12.0 |
| Sand | 75.0 - 85.0 |
| Flexibilizer or coupling additive | 0.5-1.0 |
| Glass powder | 5.0 - 6.5 |

Wherein:
- the pre-accelerated resin can already contain a reaction promoter, preferably 1% cobalt naphthenate;
- 1% starter allows a working time of about 15 minutes. If such amount is reduced to 0.5%, for instance, the working time shall correspond to about 29 minutes;
- the content of loads (selected from the group formed by fly ashes, silt, calcium carbonate powder, stone powder, foundry sand, thin sand, silica and combinations thereof) refers to the total amount of the aggregate;
- molding for 10 min - pressure 1.8 MPa.
- specification of aggregates - not exceeding 1% moisture
- specific sand mass - 2.65 g/cm³
- specific fly ash mass - 2.16 g/cm³

### Tests

### Thermal Properties

A preferential embodiment, obtained from dicyclopentadiene (DCPD) resin, was tested as to its thermal properties, to determine its thermal stability and degradation through differential scanning calorimetry (DSC) and thermogravimetric analysis (TGA) techniques at the accredited laboratory of CCDM (Center of Materials Characterization and Development/DEMA/UFSCar).

The differential scanning calorimetry assay measures the difference between energy supplied to a substance and the reference material, according to the temperature observed while both undergo a controlled temperature variation program. As the transitions of phases inside materials take place under a heat flow, either by releasing (in exothermal events) or by absorbing (in endothermal events) phenomena such as: melting, glass transition, cure and oxidation. The DSC curves of a preferential embodiment were obtained by using a Netzsch equipment (model DSC 214 Polyma), under nitrogen flow of 50 mL/min, in a small sealed aluminum pan, according to the following heating/cooling program:
a. Heating from 23°C to 300°C at a 20°C/min rate.
b. Isotherm at 300°C for 5 minutes.
c. Cooling from 300°C to 23°C at 20°C/min rate.
d. Isotherm at 23°C for 5 minutes
e. Heating from 23°C to 300°C at 20°C/min rate.

In the preferential embodiment, the results from the sample obtained with the dicyclopentadiene (DCPD) resin under this invention disclosed, upon 14-day cure, a small residual cure, with two events of the order of consumption of 10 and 20J/g, and temperatures of 114°C and 230°C, and the cure virtually completed within this period. On its turn, in the conventional Portland cement concrete, most part of the cure takes place during the first 7 days, and the process is almost completed after 28 days.

The thermogravimetric analysis is defined as an analytic technique, wherein the mass variation of the sample is measured according to the temperature variation. The thermogravimetric analysis of this same preferential embodiment was performed in a TA Instruments thermogravimetric analyzer (model TA Q500), at a 20°C/min heating rate in small aluminum pan, within a temperature range from 30 to 850°C. Within a temperature range from 30°C to 550°C, an inert nitrogen atmosphere with 50mL/min flow rate was used. Within a temperature range from 550°C to 850°C, the atmosphere was altered to an oxidative oxygen atmosphere with 50 mL/min flow rate.

The results of this preferential embodiment obtained with dicyclopentadiene (DCPD) resin disclosed a small elimination of 0.79% m/m residual monomers and water from the residual cure (up to 230°C). Another finding was a loss of 8.11% m/m mass relating to degraded organic material (lower molar mass polymers) up to 550°C, while residual ashes (up to 850°C) corresponded to 90,44% m/m. This result demonstrates a great thermal stability of the material obtained in a preferential embodiment.

### Morphology and estimate of the elementary chemical composition

The morphologic analysis and estimate of the elementary chemical composition of the product under the same preferential embodiment were performed by using a scanning electron microscope (SEM) (model Inspect S50 FEI with EDS); the sample of the preferential embodiment was coated in gold, in an amount from about 10 to 20 nm, by using secondary electrons issued to the morphologic analysis, as well as X-rays issued to the estimate of the elementary chemical composition by EDS.

The results disclosed a material with uniformly distributed aggregated phases, low porosity and excellent adhesion between the aggregates and the polymer matrix. Such results differ from what happens to the traditional Portland concrete, that shows many internal phases generated by the cure reactions thereof and by the insertion during its preparation, as well as high porosity, with opened and closed pores formed by gases release during the cure process. As shown by the EDS analysis, this preferential embodiment has an elementary chemical composition of 45.36% carbon, 25.73% oxygen, 21.79% silicon, 5.35% aluminum and 1.77% potassium.

### Flammability Test

A flammability test with the same preferential embodiment was performed by the accredited laboratory of CCDM, according to the rule IEC 60695- 11-20:2015 Fire Hazard Testing - Part 11-20: Test Flames. According to the results, the object of this invention is resistant to flame, does not present visible flames at the opposite face of the test specimen, without formation of holes larger than 3mm after cooling.

### Mechanical Properties

The resistance to axial compression and traction by diametral compression was determined at a Falcão Bauer accredited laboratory (Technological Center of Quality Control), according to the rules ABNT NBR 7680-1/2015 (ASTM C39) and ABNT NBR 7222:2011 (ASTM C496 / C496M), in samples of the preferential embodiment obtained with dicyclopentadiene (DCPD). The results disclosed a value of resistance to axial compression of (70,5 ± 0,2) MPa and resistance to traction by diametral compression of (6,1 ± 0,1) MPa. In a traditional embodiment, the Portland cement presents values from about 10 to 45 MPa of resistance to axial compression, and about 2 to 7 MPa of resistance to traction by diametral compression, depending on the water/cement ratio used. Therefore, the preferential embodiment of this invention is more resistant to axial compression than the traditional embodiment of Portland cement. This invention still discloses a resistance to traction by diametral compression that is similar to the one reached by a traditional embodiment of Portland cement.

Abrasive wear was tested at a Falcão Bauer accredited Laboratory (Technological Center of Quality Control) according to the rules ABNT NBR 9781-1/2013 (ASTM C936 / C936M - 20), in samples of the preferential embodiment obtained with dicyclopentadiene (DCPD) resin. The test disclosed an abrasive wear value of 19.5mm, that, according to the rule ABNT NBR 9781 (ASTM C936 / C936M - 20), refers to a material ranked as highly resistant, as the abrasive wear value is below 20.0 mm.

The compression on the trail support is obtained by applying a 445 kN load on the rail, supported by a plate of 360mm x 200mm x 42 mm, at a 120kN/min constant rate. According to the rule AREMA:2019, the maximum elastic vertical displacement allowed corresponds to 6,3mm, while the maximum residual vertical displacement, after 1 minute of load release, corresponds to 3.18 mm. The sleeper obtained from a preferential embodiment by using a dicyclopentadiene (DCPD) resin under this invention presented a 1.13mm elastic vertical displacement and a 0.38mm residual vertical displacement.

The insert pull out test was performed by applying a 37.8 kN axial load to each insert separately, with maintenance of the load for 3 minutes; the inserts were neither pulled out nor damaged, and no damage or crack was observed anywhere in the sleeper obtained from a preferential embodiment using dicyclopentadiene (DCPD) resin under this invention.

The positive and negative moments assay in the supports and center were performed according to the rules ABNT NBR 11709:2015 and AREMA:2019, by using 143,21 kN loads to the positive moment on the supports, 108,93 kN loads to the negative moments on the supports, 27,76kN loads to the positive moment on the center and 39,66 kN loads to the negative moment on the center; no damage or crack was observed anywhere in the sleeper obtained from a preferential embodiment with dicyclopentadiene (DCPD) resin under this invention.

The repeated loading assay on the support, also known as fatigue test, was performed according to the rules ABNT NBR 11709:2015 and AREMA:2019, by using variants within a range from 14,32 kN to 157,53kN and 7Hz frequency in a total of 3 million loading and unloading cycles; no damage or crack was observed anywhere in the sleeper obtained from a preferential embodiment with dicyclopentadiene (DCPD) resin under this invention.

A 250.62 kN overload was applied to the sleeper's support at a 50 kN /min rate for 5 mines, and then unloaded, according to the rules NBR 11709:2015 and AREMA:2019; no damage or crack was observed anywhere in the sleeper obtained from a preferential embodiment with dicyclopentadiene (DCPD) resin under this invention. Subsequently, the sleeper's support was once more loaded at the same rate up to the rupture, that took place with a 318.30 kN load.

Another preferential embodiment obtained with PET monomer resin was testes as to its mechanical properties of resistance to compression and wear abrasion, as well as of water absorption ability, at a Falcão Bauer accredited laboratory (Technological Center of Control Quality), according to the Rules ABNT NBR 9781-1/2013 (ASTM C936 / C936M- 20). The results disclosed an axial compression resistance value of (64.9 ± 8.2) MPa, with wear abrasion of 20.5 mm and water absorption of (5.4 ± 0.3)%.

Upon description of some exemplary preferential embodiments of this invention, it must be understood that the scope of this invention encompasses other possible variations of the inventive concept as described, being only limited by the content of the attached claims, including possible equivalents.

## Claims

1. Polymer composite, **characterized by** the fact that it comprises:
- sand;
- at least one load selected from the group of fly ashes, silt, calcium carbonate powder, stone powder, foundry sand, thin sand, silica, and combination thereof; and
- at least one resin selected among dicyclopentadiene, PET monomer being thermoset resin, and combination thereof;
- at least one additive selected among:
- phase compatibilizing additives, including vinyltrimethoxysilane, methacryl - trimethoxysilane methacryl oxypropyl-trimethoxysilane, calcium diacrylate, zinc diacrylate and combination thereof; or
- flexibilizer agents of polymer structure selected among butyl acrylate, butyl methyl acrylate, methyl meta acrylate, triethylene glycol methacrylate, ethylhexyl methacrylate, and combinations thereof.

2. Composite according to the claim 1, **characterized by** the fact that the resin is dicyclopentadiene in amounts ranging from 5% to 30% in mass, based on the total mass of the composite.

3. Composite according to the claim 1, **characterized by** the fact that the resin is a PET monomer in amounts ranging from 5% to 30% in mass, based on the total mass of the composite.

4. Composite according to any of the claims 1 to 3, **characterized by** the fact that it comprises from 40% to 95% sand (preferably of medium granulometry) in mass, based on the total mass of the composite.

5. Composite according to any of the claims 1 to 4, **characterized by** the fact that it comprises from 2% to 30% of at least one load in mass, based on the total mass of the composite.

6. Composite according to any of the claims 1 to 5, **characterized by** the fact that it still comprises milled rubber derived of tires.

7. Composite according to any of the claims 1 to 5, **characterized by** the fact that it still comprises fiberglass or metallic fibers, that can be short and uniformly distributed through the matrix, or long and aligned in an only direction.

8. Composite according to any of the claims 1 to 5, **characterized by** the fact that it still comprises metallic or polymer screens and frames, in layers or structures.

9. Composite according to any of the claims 1 to 8, **characterized by** the fact that the sand comprises silicon particles, but can contain other minerals, such as feldspar, mica, zircon, magnetite, ilmenite, monazite and cassiterite.

10. Composite according to any of the claims 1 to 9, **characterized by** the fact that the ashes comprise silicon dioxide (silica), aluminum oxide (alumina) and iron oxide (hematite).

11. Process for preparing the polymer composite as defined by any of the claims 1 to 10, **characterized by** the fact that it comprises the following steps:
a. Drying the sand;
b. Weighing the composite's components;
c. Mixing dry components, namely sand and one load for 20 minutes until reaching a very homogeneous mix;
d. Adding at least one liquid additive to a resin or mixture for 1 to 2 minutes, until reaching a homogeneous aspect to the formation of an organic mix, or sirup;
e. Adding a starter to the organic mix or sirup, and mixing for 1 to 2 minutes;
f. Adding the organic mixture to the mixed dry components;
g. Molding the artefact to be produced;
h. Pre-curing in an incubator at air pressure and temperature of about 60°C for about 120 minutes, and then curing for, at least, 7 days at air pressure and temperature.

12. Use of the polymer composite as defined by any of the claims 1 to 10, **characterized by** the fact that it is intended to prepare an article selected from sleepers, crossheads, purlins, interlocking floor tiles, pre-molded civil construction panels, artificial stone for benches and floors, pavement in plates used in bridges, coating plates and/or "cobogos".

13. Use of a polymer composite prepared by the process as defined by the claim 11, **characterized by** the fact that it is intended to prepare an article selected among sleepers, crossheads, purlins, interlocking floor tiles, pre-molded civil construction panels, artificial stone for benches and floors, pavement in plates used in bridges, coating plates and/or "cobogos".

14. Article **characterized by** the fact that it comprises polymer composite as defined by any of the claims 1 to 10.

15. Article according to the claim 14, **characterized by** the fact that it is a sleeper.

16. Article **characterized by** the fact that it comprises a polymer composite prepared by a process as defined by the claim 11.

17. Article according to the claim 16, **characterized by** the fact that it is a sleeper.
